# EUROPÄISCHE PATENTSCHRIFT

(11) **EP 0 989 154 B1**
(45) Veröffentlichungstag und Bekanntmachung des Hinweises auf die Patenterteilung: **24.07.2002**
(21) Anmeldenummer: 99123322.2
(22) Anmeldetag: 25.03.1997
(51) Int. Cl.: C08J 3/12

(54) **Redispergierbare Pulver auf Basis von carboxylierten butadienhaltigen Copolymeren**
Redispersible powders based on carboxylated copolymers comprising butadiene
Poudres redispersables à base de copolymères contenant du butadiène carboxylé

(30) Priorität: 13.03.1997 DE 19710380
(43) Veröffentlichungstag der Anmeldung: 29.03.2000
(62) Teilanmeldung aus: 97922815.2
(73) Patentinhaber: Buna Sow Leuna Olefinverbund GmbH, 06258 Schkopau (DE)
(72) Erfinder: Rothenhäusser, Bernd, 06124 Halle (DE); Elsässer, Dominik, 8833 Samstagern (CH); Kühn, Hartmut, 06130 Halle (DE); Kiesel, Volker, 06122 Halle (DE)

(56) Entgegenhaltungen:
- GB-A- 1 347 196
- US-A- 3 822 230

## Beschreibung

Die Erfindung betrifft gut redispergierbare Pulver auf Basis von carboxylierten butadienhaltigen Copolymeren, die sich auf Grund ihrer Eigenschaften hinsichtlich Blockfestigkeit und dem Zugfestigkeits/Dehnungs-Niveau der aus der Redispersion gezogenen Filme besonders gut im Bausektor einsetzen lassen.
Dispersionen auf Basis von carboxylierten Butadien/Styren Copolymeren werden in zunehmendem Maße in der Bauindustrie eingesetzt. Sie stellen bei vergleichbaren Eigenschaften eine Alternative zu den Copolymeren auf Basis von Polyvinylacetaten und -acrylaten dar, die vielfach in Pulverform angeboten werden.
Die drei Hauptkomponenten solcher Pulver - Polymer, Sprühhilfsmittel und Antiblockmittel - beeinflussen sich gegenseitig, wodurch es vielfach zu Störungen der gewünschten Eigenschaften kommen kann.
So zeigt ein weich eingestelltes Polymer eine hohe Blockneigung. Die Blockneigung kann zwar durch einen entsprechenden Sprühhilfsmittel- und Antiblockmittelanteil korrigiert werden, führt aber durch das Sprühhilfsmittel zu einer hohen Wasseranfälligkeit des Pulvers. Gleichzeitig kommt es zu einer Störung des Verfilmungsverhaltens aus der Redispersion.
Ein zu hoher Antiblockmitteleinsatz verdrängt außerdem die ursprünglichen, durch das Polymere bedingten Eigenschaften und stört ebenfalls die Filmbildung aus der Redispersion.
Somit ist jede Pulverrezeptur ein Kompromiß und muß auf den jeweiligen Anwendungsfall optimiert werden.
Die Vorteile von carboxylierten butadienhaltigen Copolymeren liegen vor allem in ihrer hohen Flexibilität bei einer guten Haftung auf polaren Untergründen.
Außerdem ist es leicht möglich, durch Veränderung des Verhältnisses zwischen "hart"- und "weich"-stellenden Monomeren die Flexibilität auf das dem jeweiligen Anwendungsgebiet angepaßte Niveau einzustellen.

Eine weitere wichtige Eigenschaft dieser Stoffklasse ist die Möglichkeit einer Vernetzung durch Wärme oder unter Zuhilfenahme von Vernetzungsmitteln, wie beispielsweise Melamin-Hamstoff-Formaldehyd- Harzen.
Damit ist es vorteilhaft, die Pulverform auch für die carboxylierten butadienhaltigen Dispersionen zu nutzen.
Der Einsatz und die Wirkung von Dispersionen und redispergierbaren Dispersionspulvern im Bausektor sind bekannt [s. Zeitschrift TIZ 9, S.698 (1985)].
Üblicherweise verwendet man solche Dispersionen in hydraulisch abbindenden Systemen, wie Reparaturmörtel, Fußbodenausgleichsmassen oder Fliesenkleber, um beispielsweise die Haftung auf dem Untergrund, die Verarbeitungsviskosität und die Festigkeit der gehärteten Masse zu beeinflussen.
Eine der wichtigsten Eigenschaften der carboxylierten butadienhaltigen Copolymerisate ist das Zugfestigkeit/Dehnungs- Niveau der aus den Dispersionen gezogenen Filme, sowie die Möglichkeit der Erzielung von Vernetzungen, um das Zugfestigkeitsniveau zu erhöhen.
Diese Eigenschaften prägen auch das Verhalten der im Bausektor zur Anwendung kommenden Mischungen. Es ist somit notwendig, daß sich diese Eigenschaften auch in der Pulverform erhalten.
Die Herstellung redispergierbarer Filme und Pulver auf Basis von Butadien/Styren-Copolymeren ist prinzipiell bekannt.
Um die entsprechenden Produkte zu erhalten, werden Redispergier- bzw. Sprühhilfsmittel eingesetzt und der Compound entweder als Film getrocknet oder in einem geeigneten Sprühturm gegebenenfalls unter Zugabe von Antiblockmitteln zu Pulvern aufgearbeitet.
So beschreibt die US-PS 3 968 063 den Einsatz von Harnstoff, Glycerol und Zucker als Redispergiermittel. Als Dispersion wird ein SBR-Latex eingesetzt und dieser nach dem Versetzen mit den oben genannten Mitteln zu einem Film getrocknet.
Dieser Film wird anschließend mit einem Hochgeschwindigkeitsrührer redispergiert. In der US-PS 3 822 230 wird ebenfalls die Redispergierbarkeit von Filmen aus carboxylierten Styren/Butadien-Copolymeren beschrieben. Als Redispergierhilfe werden Phthalsäure-Derivate benutzt.

Über die Möglichkeit zur Aufarbeitung zu blockfreien, rieselfähigen Pulvem werden keine Angaben gemacht.
Weiterhin nennt die EP 0 632 096 Polyvinylalkohol im Gemisch mit aminofunktionellen Polyvinylalkoholen und die EP 0 477 900 Polyvinylalkohol im Gemisch mit einem vollverseiften 1-Alkylvinylester/Vinylester-Copolymeren, das eine Höppler-Viskosität von 1 bis 5 mPas aufweist, im Zusammenhang mit Styren/Butadien-Copolymerisaten als Sprühhilfsmittel. Einen anderen Weg beschreibt die US PS 3 409 578.
Hierin wird eine harte Schale auf einem weichen Kern dadurch erzeugt, daß Metallionen wie Calcium, Barium oder Zink über Carboxylgruppen, die aus dem Basispolymeren oder einem Zusatzpolymeren stammen können, auf die Oberfläche gebunden werden.
Die Herstellung von frei fließenden und klumpenfreien Pulvern auf Basis von Butadien/Styren-Copolymerisaten wird in der US-PS 3 784 648 bzw. in der DE-AS 2 049 114 erwähnt. Als Sprühhilfsmittel wird das "sulfonatgruppen"-haltige Kondensationsprodukt aus Melamin und Formaldehyd benutzt.
Mit diesem Sprühhilfsmittel wurde eine Copolymerdispersion mit einer Polymerbasis bestehend aus 40 Gew.% Butadien und 60 Gew.% Styren versprüht. Es wurde ein frei fließendes, redispergierbares Pulver erhalten. Die Redispersion wies aber laut DE 2 049 114 eine durchschnittliche Teilchengröße zwischen 2.000 und 7.000 nm auf. Diese Werte liegen bedeutend höher als die der Ausgangsdispersionen, die bei dieser Dispersionsart üblicherweise zwischen 100 und 200 nm liegen.
Damit ist die Redispersion nicht in ausreichendem Maße gegeben, eine entsprechende Filmbildung aus der Redispersion also behindert.
Aussagen über die Eigenschaften der aus der Redispersion gezogenen Filme werden in keiner der aufgeführten Patentschriften getroffen.

Der Erfindung lag die Aufgabe zugrunde, die Merkmale der Erfindung gemäß Patentanmeldung DE 196 13 302 hinsichtlich einer weiteren Verbesserung der Redispergierbarkeit vorteilhaft auszugestalten.

Gegenstand der Erfindung sind redispergierbare Pulver aus Dispersionen auf Basis von Copolymeren des Butadiens mit Styren und/ oder Acrylnitril, die 0,5 bis 15 Gew.% bezogen auf das Polymere, vorzugsweise 1 bis 8 Gew.% einer ungesättigten Carbonsäure mit einer oder zwei Carbonsäuregruppen, wie beispielsweise Acrylsäure, Methacrylsäure, Fumarsäure, Maleinsäure oder Itaconsäure bzw. Mischungen hiervon, enthalten.
Diese Dispersionen werden mit 1 bis 20 Gew.% eines Di- oder Tetra- Natrium-, bzw. Kalium-Salzes eines Additionsproduktes aus N-alkyl-sulfosucciamaten mit Maleinsäure in Mischung mit Polyvinylalkohol versprüht.
Vorzugsweise werden 2 bis 10 Gew.% Tetra-Natrium-(1,2-di carboxyethyl)-N-oleyl-sulfosuccinamat und 4 bis 15 Gew.% Polyvinylalkohol eingesetzt.

Dabei können zusätzlich 2 bis 30 Gew.% Antiblockmittel, wie beispielsweise Kreide, Talkum, Diatomeenerde, Kaolin, Silikate, Kieselsäure, Zemente, Calciumcarbonat und ähnliche Stoffe eingeblasen werden.
Die Herstellung der Pulver erfolgt dann in den üblichen Sprüh-, Scheiben- oder Walzentrocknern. Die Viskosität der zu versprühenden Lösungen sollte 2 Pa s nicht überschreiten ( s. DE 34 17 388). Im Bedarfsfall können Hilfsmittel, wie Viskositätsregler oder Entschäumer zugesetzt werden.
Die Trocknungstemperaturen für solche Systeme liegen üblicherweise zwischen 60 und 80 °C.
Die nachfolgenden Beispiele dienen zur weiteren Erläuterung der Erfindung und verdeutlichen die Vorzüge der erfindungsgemäßen redispergierbaren Pulver anhand der erreichten Eigenschaftswerte. Die Beispiele 1 bis 3 stellen Vergleichsbeispiele dar, erläutern damit den Stand der Technik und sind nicht erfindungsgemäß. In einem Sprühtrockner werden die in Tabelle 1 aufgeführten Dispersionen unter Zugabe von 15 Gew.% feinverteiltem Aluminiumsilikat versprüht.

**Tab. 1:**

| Zusammensetzung der in den Beispielen benutzten Latices | | | | | |
|---|---|---|---|---|---|
| Latex Nr. | % Butadien | % Styren | % Acrylnitril | Carbonsäure | % |
| 1 | 77 | 23 | ohne | ohne | |
| 2 | 60 | 40 | ohne | ohne | |
| 3 | 50 | 49 | ohne | Acrylsäure | 1 |
| 4 | 62 | 36 | ohne | Acrylsäure | 2 |
| 5 | 30 | 68 | ohne | Acrylsäure | 2 |
| 6 | 60 | 37 | ohne | Acrylsäure | 3 |
| 7 | 60 | 36 | ohne | Acrylsäure | 4 |
| 8 | 60 | 39 | ohne | Itaconsäure | 1 |
| 9 | 30 | 68 | ohne | Itaconsäure | 2 |
| 10 | 50 | 48 | ohne | Itaconsäure | 2 |
| 11 | 60 | 37 | ohne | Itaconsäure | 3 |
| 12 | 57 | ohne | 40 | Methacrylsäure | 3 |
| 13 | 63 | ohne | 35 | Methacrylsäure | 2 |
| 14 | 53 | 10 | 35 | Methacrylsäure | 2 |

Die jeweiligen Sprühhilfsmittel sind in den einzelnen Beispielen beschrieben und in Tab. 2 zusammengefaßt.

**Tab. 2:**

| Zusammenstellung der in den einzelnen Beispielen verwendeten Sprühhilfsmittel | | | | |
|---|---|---|---|---|
| Beispiel | TNOS Gew.% | PVOH 4-88 Gew.% | PVOH 17-88 Gew.% | PVOH 10-98 Gew.% |
| 1 | | 10 | | |
| 2 | | | | 10 |
| 3 | | 20 | | |
| 4 | 05 | 12 | | |
| 5 | 1 | | 12 | |
| 6 | 2 | | | 12 |
| 7 | 2 | 15 | | |
| 8 | 1 | 15 | | |
| 9 | 1 | | 10 | |
| 10 | 1 | | | 15 |
| 11 | 2 | | | 15 |
| 12 | 2 | 10 | | |
| 13 | 2 | | 10 | |
| 14 | 2 | | | 10 |
| 15 | 4 | 8 | | |
| 16 | 4 | | 8 | |
| 17 | 4 | | | 8 |
| 18 | 4 | | 6 | |
| PVOH 4-88 : Polyvinylalkohol 4- 88 | | | | |
| PVOH 17-98 : Polyvinylalkohol 17-98 | | | | |
| PVOH 10-98 : Polyvinylalkohol 10-98(vollverseift) | | | | |
| TNOS : Tetra-Natrium-N-(1,2-di-carboxyethyl)-N-oleyl-sulfosuccinamat | | | | |

Von den enstandenen Pulvem wurde das Blockverhalten auf folgendem Weg bestimmt.

50 cm³ Pulver werden in einen Metallzylinder mit einem Innendurchmesser von 60 mm und einer Höhe von 150 mm gefüllt. Dann wird ein Stempel mit einem Gewicht von 5000 g eingesetzt und die Probe bei 20 °C 24 h gelagert.
Danach wird die Pulvertablette langsam aus den Zylinder gedrückt und unter Zuhilfenahme folgender Skala beurteilt:

| Note | |
|---|---|
| 1 | keine Pulvertablette |
| 2 | Pulvertablette ist mit den Fingern nicht aufzunehmen |
| 3 | Pulvertablette ist mit den Fingern aufzunehmen |
| 4 | Pulvertablette zerfällt bei leichtem Fingerdruck |
| 5 | Pulvertablette zerfällt bröcklig |
| 6 | Pulvertablette bleibt fest geformt. |

Die Redispergierbarkeit des Pulvers wird durch eine Sedimentationsanalyse ermittelt. Dazu werden 50 ml einer 5 %igen Redispersion in eine Sedimendationsbürette mit einer 0,1 ml Graduierung gefüllt und die Höhe des Bodensediments nach 24 h abgelesen. Eine als sehr gut einzuschätzende Redispersion darf nach dieser Methode lediglich Werte zwischen 2 und 10 aufweisen. Diese sind durch das Antiblockmittel bedingt.
Weiterhin wird aus dem Pulver eine 50 %ige Redispersion hergestellt. Von dieser wird die entstandene Teilchengröße mit einem Ultrafine Particle Analyser bestimmt. Das Film/Dehnungs-Niveau der aus der Ausgangsdispersion bzw. Redispersion gezogenen Filme im ungeheizten und bei 145 °C, 10 min geheizten, sowie im vemetzten Zustand wird nach der DIN 53 504 ermittelt.
Die Vernetzung erfolgt durch Zusatz von 10 Gew.% (bez. auf Polymer) eines Melamin-Hamstoff-Formaldehyd-Harzes.

### Beispiel 1:

Der Latex Nr.1 aus Tab.1 mit einem Styrengehalt von 23 Gew.% wird, wie in Tab. 2 zusammenfassend dargestellt, mit 10 Gew.% Polyvinylalkohol 4-88 versetzt und versprüht. Die in der Typenbezeichnung 4-88 genannte 1. Zahl zeigt die Viskosität einer 4 %igen Lösung des Polyvinylalkohols gemessen in mPa s an, während die 2. Zahl den Hydrolysegrad des Polyvinylalkohols angibt.
Das entstandene Pulver war klumpig und es kam zu Verklebungen in der Sprühtrocknungsapparatur. Es konnte keine vollständige Redispersion hergestellt werden, da ca. 40 Gew.% des Pulvers nicht redispergierbar waren. Die aus der Redispersion gezogenen Filme waren rissig und von geringer Festigkeit.
Die weiteren Ergebnisse sind in Tab. 3 zu finden.

### Beispiel 2:

Ein Latex mit einem Styrengehalt von 40 Gew.% (Latex 2 aus Tab.1) wird mit Polyvinylalkohol gemäß Tab. 2 versprüht. Das entstandene Pulver war klumpig und ließ sich nur schlecht redispergieren. Beim Blocktest bildete sich eine feste Tablette.

### Beispiel 3:

Es wurde der Latex aus Beispiel 2 unter Einsatz eines erhöhten Anteils Polyvinylalkohol versprüht (s.Tab.1 u. 2). Dadurch verbesserte sich zwar das Sprühverhalten, jedoch wies das Pulver ein sehr schlechtes Blockverhalten auf.Die Redispergierbarkeit und die Filmwerte waren ebenfalls unzureichend.

### Beispiel 4 bis 18:

Es wurde erfindungsgemäß, wie in den Tabellen 1 und 2 zusammengefaßt, gearbeitet.
Die entstandenen Pulver waren gut redispergierbar und wiesen gute Blockfestigkeiten auf.
Die aus der Redispersion gezogenen Filme lagen mit ihrem Zugfestigkeits/Dehnungs-Niveau auf dem der Ausgangsdispersionen, teilweise, wie in den Beispielen 4, 7, 10, 14 und 16 , sogar höher. Das Vernetzungsverhalten war nicht beeinträchtigt.

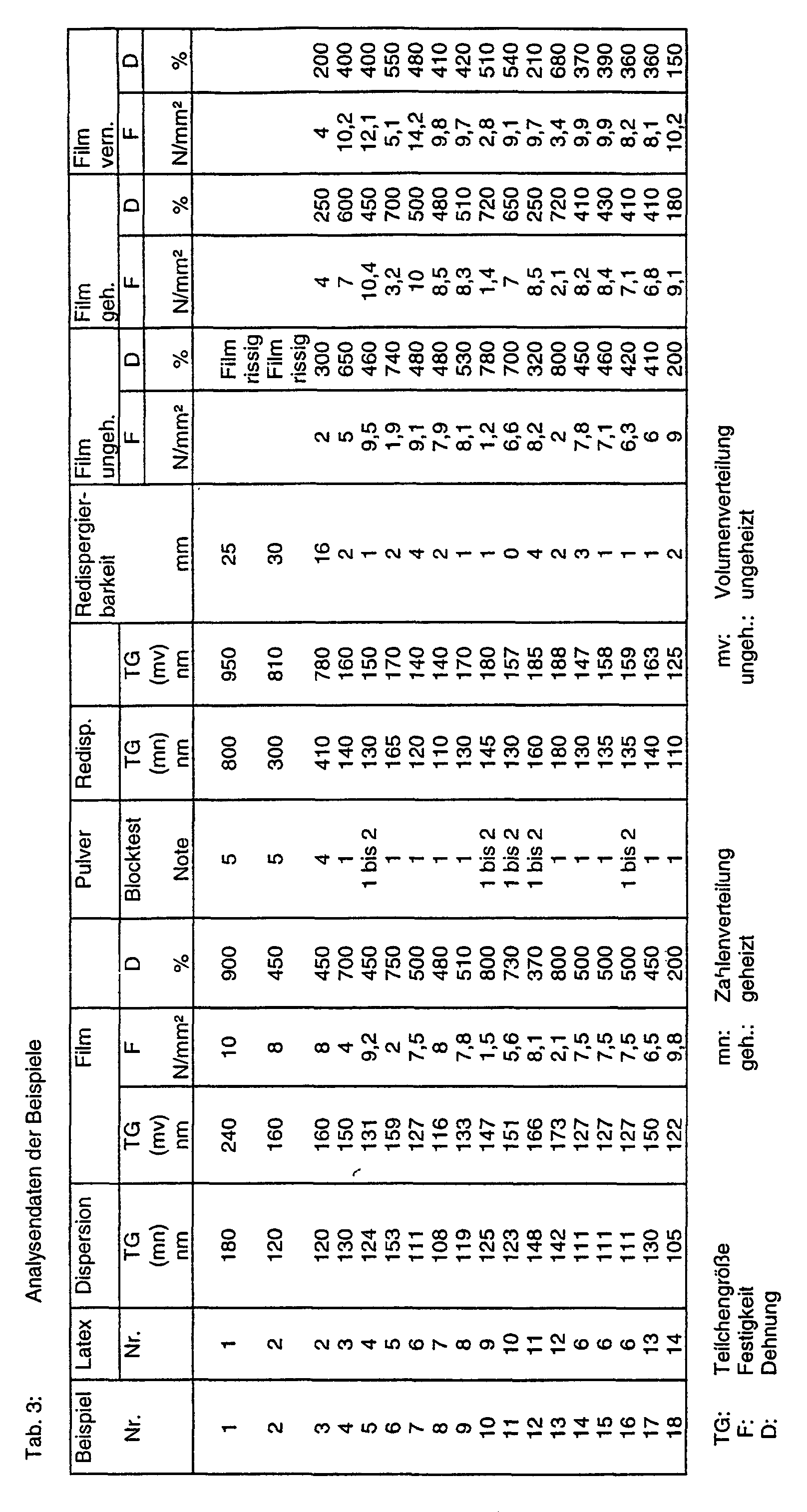

## Patentansprüche

1. Redispergierbare Pulver erhältlich durch Versprühen von carboxylierten butadienhaltigen Copolymeren aus Styren und / oder Acrylnitril, deren aus der Redispersion gezogenen Filme gute Zugfestigkeiten aufweisen , **dadurch gekennzeichnet, daß** carboxylierte Styren-Butadien Latices mit einem Gehalt an ungesättigten Carbonsäuren von 0,5 bis 15 Gew.% bezogen auf Polymeres, mit einem Sprühhilfsmittel bestehend aus 1 bis 20 Gew.% eines Di- oder Tetra- Natrium-, bzw. Kalium-Salzes eines Additionsproduktes aus N-alkyl-sulfosuccinamaten mit Maleinsäure in Mischung mit Polyvinylalkohol, verwendet werden.

2. Redispergierbare Pulver nach Anspruch 1, **dadurch gekennzeichnet, daß** als Tetra-Natrium-Salz eines Additionsproduktes aus N-alkyl-sulfosuccinamaten 2 bis 10 Gew.% Tetra-Natrium-N-(1,2-di-carboxyethyl)-N-oleyl-sulfosuccinamat eingesetzt werden.

3. Redispergierbare Pulver nach den Ansprüchen 1 bis 2 **dadurch gekennzeichnet, daß** vorzugsweise 4 bis 15 Gew.% Polyvinylalkohol eingesetzt werden.

## Claims

1. Redispersible powders, available through spraying carboxylated butadiene-containing copolymers of styrene and/or acrylonitrile the sheeting of which, drawn from redispersion, have good tensile strength properties, **characterized in that** carboxylated styrene-butadiene latexes with a content of unsaturated carboxylic acids of 0.5 to 15 percent by weight relative to the polymer are used with a spraying agent of 1 to 20 percent by weight of a disodium or tetrasodium or potassium salt of an addition product of an N-alkyl-sulphosuccinamate with maleic acid in a mixture with polyvinyl alcohol.

2. Redispersible powders according to claim 1, **characterized in that** 2 to 10 percent by weight of tetrasodium-N-(1,2dicarboxyethyl)-N-oleyl-sulphosuccinamate are used as tetrasodium salt of an addition product of N-alkyl-sulphosuccinamates.

3. Redispersible powders according to claims 1 through 2, **characterized in that** preferably 4 to 15 percent by weight of polyvinyl alcohol are used.

## Revendications

1. Poudre redispersible pouvant être obtenue par pulvérisation de copolymères carboxylés de styrène et/ ou d'acrylnitrile contenant du butadiène, dont les pellicules tirées de la redispersion présentent de bonnes résistances à la traction, **caractérisée par le fait que** les latex carboxylés au styrène butadiène, ayant une teneur en acides caboxyliques insaturés de 0,5 jusqu'à 15 % en poids par rapport aux polymères, sont utilisés avec un auxiliaire de pulvérisation constitué de 1 à 20 % en poids d'un sel de disodium ou de tétrasodium, respectivement d'un sel de dipotassium ou de tétrapotassium d'un produit d'addition de N-alkyle-sulfosuccinamate avec de l'acide maléique mélangé avec de l'alcool polyvinylique.

2. Poudre redispersible selon la revendication 1 **caractérisée par le fait que** comme sel de tétrasodium est utilisé un produit d'addition de N-alkyle-sulfosuccinamates de 2 à 10 % en poids de tétra-sodium-N-(1,2-di-carboxyéthyle)-N-oléyle-sulfosuccinamate.

3. Poudre redispersible selon les revendications de 1 à 2 **caractérisée par le fait qu'**est utilisé de préférence de 4 à 15 % en poids d'alcool polyvinylique.
